# FASCICULE DE BREVET EUROPEEN

(11) **EP 0 714 799 B1**
(45) Date de publication et mention de la délivrance du brevet: **02.09.1998**
(21) Numéro de dépôt: 95402420.4
(22) Date de dépôt: 30.10.1995
(51) Int. Cl.: B60J 10/08

(54) **Garniture souple d'étanchéité notamment pour porte de véhicule automobile**
Biegsame Dichtung insbesondere für Kraftfahrzeugtüren
Pliable seal especially for doors of motor vehicles

(30) Priorité: 28.11.1994 FR 9414234
(43) Date de publication de la demande: 05.06.1996
(73) Titulaire: AUTOMOBILES PEUGEOT, 75116 Paris (FR); AUTOMOBILES CITROEN, 92200 Neuilly-sur-Seine (FR)
(72) Inventeur: Guigon, Michel, F-950500 Beaucourt (FR)
(74) Mandataire: Thinat, Michel

(56) Documents cités:
- DE-A- 1 555 806
- DE-A- 2 631 568
- FR-A- 1 314 812
- FR-A- 2 429 944

## Description

La présente invention concerne une garniture souple d'étanchéité notamment pour porte de véhicule automobile.

On connaît de telles garnitures comprenant une bande souple d'étanchéité en forme de U destinée à coiffer le bord d'une pièce à garnir et comportant des languettes élastiques découpées dans ses parois latérales venant serrer le bord de la pièce et un joint d'étanchéité intercalaire disposé dans le fond de la bande souple d'étanchéité et dans lequel s'enfonce l'extrémité du bord de la pièce.

Cependant, ces garnitures d'étanchéité connues ne sont pas adaptées pour faciliter leur montage sur la pièce à garnir correspondante et n'offrent pas la possibilité d'un montage automatique sur celle-ci.

La présente invention a pour but d'éliminer les inconvénients ci-dessus des garnitures d'étanchéité connues.

A cet effet, l'invention propose une garniture souple d'étanchéité notamment pour porte de véhicule automobile, comprenant une bande souple d'étanchéité en forme de U destinée à coiffer le bord d'une pièce à garnir et comportant des languettes élastiques découpées dans ses parois latérales pour venir serrer le bord de la pièce et un joint d'étanchéité intercalaire disposé dans le fond de la bande souple d'étanchéité et dans lequel s'enfonce l'extrémité du bord de la pièce, et qui est caractérisée en ce qu'avant montage, le joint intercalaire est interposé entre les languettes élastiques de façon à maintenir celles-ci écartées et permettre le passage entre elles du bord de la pièce qui pousse le joint intercalaire dans le fond de la bande souple d'étanchéité de sorte que les languettes élastiques sont automatiquement libérées pour serrer le bord de la pièce après montage.

Avantageusement, le joint intercalaire est réalisé en une matière malléable par exemple thermoplastique.

De préférence, la bande souple en U est en tôle.

L'invention sera mieux comprise et d'autres buts, caractéristiques, détails et avantages de celle-ci apparaîtront plus clairement au cours de la description explicative qui va suivre faite en référence aux dessins schématiques annexés, illustrant un mode de réalisation de l'invention, et dans lesquels.

Les figures 1 à 3 représentent les différentes phases de montage, conformément à l'invention, de la garniture d'étanchéité sur une feuillure de porte de véhicule automobile.

La figure 4 est une vue de la garniture d'étanchéité suivant la flèche IV de la figure 3 sans la feuillure de porte.

En se référant aux figures, la référence 1 désigne une garniture souple d'étanchéité formant notamment joint d'étanchéité pour porte de véhicule automobile et destinée à coiffer le bord ou feuillure 2 de la porte P.

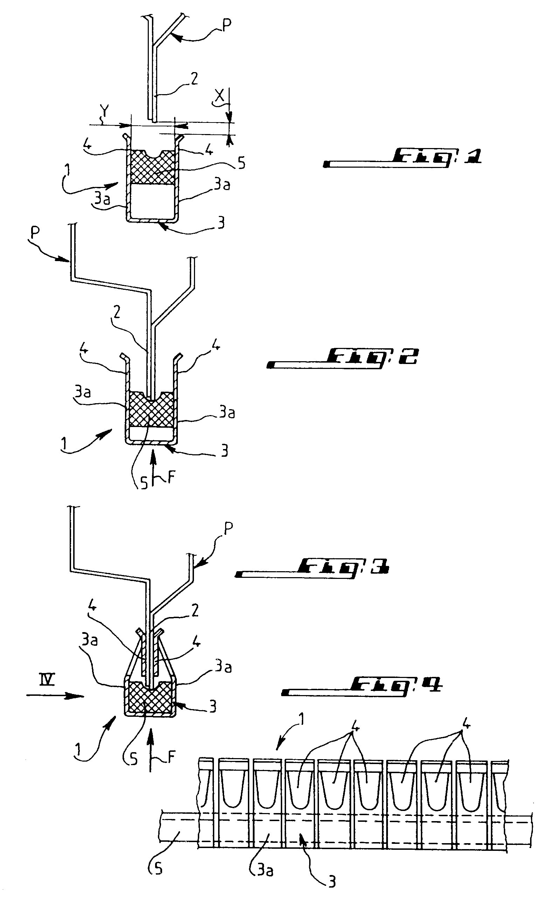

La garniture 1 comprend une bande 3 en tôle souple pliée en forme de U, dont les parois latérales 3a sont découpées de façon à définir des languettes élastiques 4 venant serrer la feuillure 2 en position montée de la garniture 1 comme représenté sur la figure 3 qui montre également la présence d'un joint d'étanchéité intercalaire 5 disposé dans le fond de la bande souple d'étanchéité 3. Le joint 5 est réalisé en matériau malléable tel qu'une matière thermoplastique et l'extrémité de la feuillure est enfoncée en partie dans le joint 5.

Selon l'invention, avant montage de la garniture 1, le joint intercalaire 5 est logé dans la bande 3 en U en étant interposé entre les languettes élastiques 4 de façon à maintenir celles-ci écartées à une position telle qu'elle soient situées sensiblement dans le plan de leurs parois latérales respectives 3a. La figure 1 montre cette position particulière du joint intercalaire 5 définissant une cote d'ouverture Y de passage de la feuillure 2 de la porte P avec la garniture 1 prépositionnée relativement à la feuillure 2 suivant la côte X. Ainsi, le joint intercalaire 5 permet à lui seul la possibilité d'un montage en automatique de la garniture 1.

Ce montage automatique s'effectue de la façon suivante.

Après le positionnement de la garniture 1 relativement à la feuillure 2 comme représenté en figure 1, la garniture 1 est engagée sur la feuillure 2 dans la direction indiquée par la flèche F en figure 2 de sorte que le joint intercalaire 5 est poussé vers le fond de la bande d'étanchéité 3. Durant cette phase d'engagement de la garniture 1, une fonction d'étanchéité entre la feuillure 2 et le joint intercalaire 5 est déjà assurée.

La figure 3 montre le joint intercalaire 5 en position totalement repoussée dans le fond de la bande d'étanchéité 3 par la feuillure 2. A cette position, les languettes élastiques 4 sont libérées et en appui jointivement sur la feuillure 2. Ceci assure un autocentrage de la garniture 1 et une étanchéité parfaite entre la feuillure 2 et le joint intercalaire 5, constituant ainsi une zone d'étanchéité entre l'intérieur et l'extérieur du véhicule. La garniture d'étanchéité a été décrite en référence à un montage automatique mais il est bien entendu que ce principe de montage s'applique également en mode manuel.

## Revendications

1. Garniture souple d'étanchéité notamment pour porte de véhicule automobile, comprenant une bande souple d'étanchéité (3) en forme de U destinée à coiffer le bord (2) d'une pièce à garnir (P) et comportant des languettes élastiques (4) découpées dans ses parois latérales (3a) pour venir serrer le bord de la pièce (2) et un joint d'étanchéité intercalaire (5) disposé dans le fond de la bande souple d'étanchéité (3) et dans lequel s'enfonce l'extrémité du bord (2) de la pièce (P), caractérisée en ce qu'avant montage, le joint intercalaire (5) est interposé entre les languettes élastiques (4) de façon à maintenir celles-ci écartées et permettre le passage entre elles du bord (2) de la pièce (P) qui pousse le joint intercalaire (5) dans le fond de la bande souple (3) de sorte que les languettes élastiques (4) sont libérées pour serrer le bord (2) de la pièce (P) après montage.

2. Garniture selon la revendication 1, caractérisée en ce que le joint intercalaire (5) est réalisé en une matière malléable, par exemple une matière thermoplastique.

3. Garniture selon la revendication 1 ou 2, caractérisée en ce que la bande souple en U (3) précitée est en tôle.

## Claims

1. Flexible seal in particular for an automotive vehicle door, comprising a flexible U-shaped sealing strip (3) intended to top the edge (2) of a part (P) to be fitted and comprising elastic tongues (4) cut out in its side walls (3a) for clamping the edge of the part (2) and an intermediate sealing joint (5) disposed in the bottom of the flexible sealing strip (3) and into which the end of the edge (2) of the part (P) is driven, characterized in that before the mounting, the intermediate joint (5) is interposed between the elastic tongues (4) so as to hold the latter spaced apart and to permit the passage therebetween of the edge (2) of the part (P) which pushes the intermediate joint (5) into the bottom of the flexible strip (3) so that the elastic tongues (4) are released for clamping the edge (2) of the part (P) after the mounting.

2. Seal according to claim 1, characterized in that the intermediate joint (5) is made from a malleable material for example from a thermoplastic material.

3. Seal according to claim 1 or 2, characterized in that the aforesaid flexible channel-like strip (3) is made from a metal sheet.

## Patentansprüche

1. Nachgiebige Dichtung insbesondere für eine Kraftfahrzeugtür, mit einer zum Abdecken des Rades (2) eines auszustattenden Stückes (P) bestimmten U-förmigen Dichtungstreifenleiste (3), die in ihren Seitenwänden (3a) ausgeschnittene elastische Zungen (4) aufweist, um den Rand des Stückes (2) einzuklemmen und einer in dem Boden der nachgiebigen Dichtungstreifenleiste (3) angeordneten zwischengeschalteten Dichtungspackung (5), in welcher das Ende des Randes (2) des Stückes (P) eindringt, dadurch gekennzeichnet, daß vor dem Einbau, die zwischengeschaltete Packung (5) zwischen den elastischen Zungen (4) derart zwischengefügt wird, daß dieselben auseinandergespreizt gehalten werden und der Durchgag zwischen diesen des Randes (2) des Stückes (P), der die zwischengeschaltete Packung (5) in den Boden der nachgiebigen Streifenleiste (3) schiebt, gestattet wird, so daß die elastischen Zungen (4) freigesetzt werden, um den Rand (2) des Stückes (P) nach dem Einbau einzuklemmen.

2. Dichtung nach Anspruch 1, dadurch gekennzeichnet, daß die zwischengeschaltete Packung (5) aus einem hämmerbaren Werkstoff z.B. einem thermoplastischen Werkstoff hergestellt wird.

3. Dichtung nach Anspruch 1 oder 2, dadurch gekennzeichnet, daß die vorgenannte nachgiebige U-förmige Streifenleiste (3) aus Blech besteht.
